Europäisches Patentamt

European Patent Office

Office européen des brevets

(11) Numéro de publication: **0 389 346 B1**

# (12) FASCICULE DE BREVET EUROPEEN

(45) Date de publication de fascicule du brevet: **07.09.94** (51) Int. Cl.⁵: **B01D 17/022**, C10G 31/08

(21) Numéro de dépôt: **90400733.3**

(22) Date de dépôt: **16.03.90**

Le dossier contient des informations techniques présentées postérieurement au dépôt de la demande et ne figurant pas dans le présent fascicule.

(54) **Dispositif de séparation de deux liquides non miscibles et application de ce dispositif au dessalage d'une charge hydrocarbonée.**

(30) Priorité: **24.03.89 FR 8903921**

(43) Date de publication de la demande:
**26.09.90 Bulletin 90/39**

(45) Mention de la délivrance du brevet:
**07.09.94 Bulletin 94/36**

(84) Etats contractants désignés:
**BE DE ES FR GB IT NL**

(56) Documents cités:
EP-A- 0 004 724      EP-A- 0 207 797
DE-A- 18 491         DE-A- 2 148 978
DE-A- 3 103 723      DE-A- 3 122 289
DE-C- 79 614         FR-A- 2 515 328
FR-A- 2 598 429      US-A- 3 794 583
US-A- 4 391 716

(73) Titulaire: **Société Anonyme dite: COMPAGNIE DE RAFFINAGE ET DE DISTRIBUTION TOTAL FRANCE**
**84, rue de Villiers**
**F-92538 Levallois Perret (FR)**

(72) Inventeur: **Durrieu, Marc**
**78, rue du Général de Gaulle**
**F-76310 Sainte Adresse (FR)**

(74) Mandataire: **Jolly, Jean-Pierre et al**
**Cabinet Jolly**
**54, rue de Clichy**
**F-75009 Paris (FR)**

Rank Xerox (UK) Business Services
(3. 10/3.0 9/3.3.3)

## Description

La présente invention concerne un dispositif pour favoriser la séparation et/ou le contact de deux liquides. Elle concerne également l'utilisation de ce dispositif pour le dessalage d'une charge hydrocarbonée.

C'est à cette application que l'on se référera plus en détail ci-après, mais il est clair que le dispositif objet de l'invention peut être utilisé pour la séparation d'autres couples de liquides non miscibles que le couple eau-pétrole brut.

A sa sortie du puits d'exploitation, le pétrole brut est en mélange avec une quantité plus ou moins importante d'eau contenant des sels en solution (chlorures de sodium, magnésium, calcium), qui fait l'objet d'une première séparation, sur le champ même d'exploitation. Le pétrole qui parvient aux raffineries n'en contient pas moins encore un certain volume d'eau salée et, avant tout traitement ultérieur, il convient de procéder à son élimination. On effectue généralement cette opération en injectant de l'eau dans le brut et en émulsionnant ce mélange pour former une phase aqueuse dispersée dans la phase hydrocarbure, sous forme de très fines gouttelettes. Cette phase aqueuse a capté l'eau salée résiduelle présente initialement dans le pétrole brut. En séparant ensuite la phase aqueuse de la phase hydrocarbure par rupture de l'émulsion formée, éventuellement après addition d'un désémulsifiant, dans un dispositif approprié tel qu'un dessaleur électrostatique, pour réaliser la coalescence des gouttelettes d'eau, on récupère un pétrole brut qui ne contient plus qu'une faible fraction de l'eau et des sels.

L'efficacité du procédé de dessalage dépend de la qualité du "lavage" du pétrole brutet donc de la surface de contact entre les phases eau et hydrocarbure. Cette surface est d'autant plus grande que les gouttes d'eau sont plus petites, ce qui a cependant pour effet de compliquer ensuite la coalescence des gouttes d'eau nécessaire à la séparation des deux phases, une émulsion de gouttes d'eau très fines étant souvent stable et, donc, difficile à rompre.

Dans la pratique, le rendement du dessalage Rd, par de tels procédés, est calculé par la relation :

$$Rd = \frac{[Sels]\ entrée - [Sels]\ sortie}{[Sels]\ entrée} \times 100$$

dans laquelle [Sels] est la concentration en sels de l'hydrocarbure, respectivement en amont et en aval des opérations de dessalage.

Rd est généralement de l'ordre de 70 à 90% pour un dessaleur fonctionnant correctement. Or la présence de chlorures de sodium, de magnésium et de calcium résiduels dans le pétrole brut ainsi traité se traduit par des majorations considérables du coût des opérations ultérieures effectuées sur ce brut, telles des consommations supplémentaires de catalyseur au craquage catalytique et des formations excessives de coke à la viscoréduction.

On connaît, par la demande de brevet français déposée le 7 Mai 1986, au nom de la Demanderesse, et publiée le 13 Novembre 1987, sous le n° 2.598.429, un procédé et un dispositif permettant d'améliorer la séparation de l'eau et du pétrole brut en faisant passer le mélange à l'intérieur d'au moins un tube dans lequel est disposé un faisceau de fibres.

Selon l'exemple 9 de cette demande de brevet, on fait passer le mélange dans deux tubes en série.

La Demanderesse a maintenant établi qu'il est possible de réaliser de façon simple cet ensemble de tubes en employant la technique utilisée pour réaliser des échangeurs de chaleur, tels que ceux décrits dans le certificat d'utilité français N° 2.515.328. Dans de tels échangeurs, les chambres dans lesquelles circulent les fluides sont séparées par un ensemble en sandwich formé de trois bandes de tôles superposées, à savoir deux tôles planes entre lesquelles est disposée une tôle ondulée dont les ondulations s'étendent transversalement.

La présente invention vise donc à proposer un dispositif de séparation des deux liquides non miscibles constituant les deux phases d'une émulsion et, plus spécialement, de traitement d'une émulsion d'eau dans du pétrole brut, qui assurent un dessalage beaucoup plus poussé de celui-ci, pouvant atteindre et dépasser 95% de la teneur initiale en sels.

L'invention vise également à proposer un tel dispositif de ce type qui puisse être utilisé en continu sans accroissement sensible du coût des procédés usuels de dessalage du pétrole brut, à l'aide de moyens simples et déjà utilisés dans d'autres domaines techniques.

L'invention a donc pour objet un dispositif pour favoriser la séparation et/ou le contact de deux liquides non miscibles, ledit dispositif comprenant au moins une conduite d'alimentation en une émulsion des deux

2

liquides d'au moins un tube, dans lequel est disposé, dans le sens de sa longueur, selon au moins une partie de celle-ci, un faisceau de fibres présentant une mouillabilité préférentielle par l'un des deux liquides, ledit tube étant relié à un décanteur dans lequel les deux liquides se séparent, ledit décanteur étant équipé de conduites d'évacuation des deux liquides, ledit dispositif étant caractérisé en ce que les fibres sont réparties dans un ensemble de tubes (59) délimités par deux parois, séparées par une distance sensiblement constante et par un élément ondulé, inséré entre ces parois et en contact alternativement avec chacune d'entre elles par ses ondulations.

L'invention a également pour objet l'utilisation de ce dispositif pour le dessalage d'une charge hydrocarbonée, notamment de pétrole brut, en provenance d'un dessaleur sous la forme d'une émulsion d'eau et de cette charge, caractérisée en ce que cette émulsion est introduite à une extrémité dudit dispositif et s'écoule dans les tubes de ce dispositif jusqu'à son extrémité opposée pour y être recueillie dans un décanteur.

L'invention a enfin pour objet l'utilisation de ce dispositif pour le dessalage d'une charge hydrocarbonnée que l'on introduit en mélange avec de l'eau dans un dessaleur, caractérisée en ce que ce mélange est introduit à une extrémité dudit dispositif en amont du dessaleur et s'écoule dans les tubes de ce dispositif jusqu'à l'extrémité opposée pour y être introduit dans le dessaleur.

Du fait de la mouillabilité préférentielle des fibres par l'un des deux liquides, l'eau ou la phase hydrocarbonée dans le cas du dessalage, les gouttes dudit liquide auront tendance à coalescer entre elles, à gainer les fibres et à s'écouler le long de celles-ci, en créant ainsi un film continu augmentant la possibilité de capter des gouttes résiduelles, sans pour autant former une émulsion de très fines gouttelettes de l'un des deux liquides à l'intérieur de l'autre.

Dans le cas d'un dispositif de dessalage du pétrole brut, l'enceinte contenant les tubes équipés d'un faisceau de fibres peut être placée en amont et/ou en aval du dessaleur.

Si elle est placée en amont du dessaleur, un transfert du sel dans l'eau de dessalage s'opèrera ainsi avant même que le mélange n'atteigne le dessaleur, et la séparation dans celui-ci des phases eau salée et phase hydrocarbonée sera facilitée par le fait que l'un des liquides s'écoulera préférentiellement le long des fibres, généralement avec une vitesse différente de celle de l'autre liquide, du fait de leur différence de viscosité.

Dans les conditions de mise en oeuvre du procédé de dessalage, et compte tenu du fait que la quantité d'eau de dessalage est notablement plus faible que la quantité de pétrole, on peut utiliser des fibres ayant une mouillabilité préférentielle par l'eau.

Si l'enceinte contenant les tubes équipés d'un faisceau de fibres est placée en amont du dessaleur, le conduit d'alimentation pourra être alimenté en mélange d'eau et de pétrole brut sans prévoir la vanne de mélange utilisée habituellement pour mélanger intimement l'eau et le pétrole brut. Grâce aux fibres du faisceau, la surface de contact entre l'eau et le brut sera suffisante, sans qu'il soit nécessaire d'utiliser des gouttelettes de très faible diamètre, ce qui facilitera ensuite la séparation des phases.

Dans le cas où cette enceinte est placée en aval du dessaleur, les fibres auront de préférence une mouillabilité préférentielle par l'eau, afin que les gouttelettes d'eau salée demeurant dans la phase hydrocarbures à la sortie du dessaleur coalescent à la surface desdites fibres en y formant un film sensiblement continu. A l'extrémité aval des faisceaux de fibres, la phase aqueuse résiduelle sera ainsi pratiquement séparée de l'eau et pourra être recueillie dans un séparateur par décantation.

Suivant les effets désirés et les conditions du traitement, on pourra utiliser des fibres de polymères, par exemple des fibres de polyamide, des fibres de verre, de bore, de carbone, d'acier inoxydable ou toute autre fibre présentant de bonnes propriétés hydrophiles. Le faisceau de fibres sera fixé à l'intérieur du tube qu'il équipera de manière à occuper sensiblement toute sa section transversale. Le taux de remplissage du tube sera choisi en fonction de l'effet recherché. Il pourra être de l'ordre, par exemple, de 5 à 80% et, préférentiellement, de 10 à 50%. De même, le diamètre des fibres pourra varier et être compris entre 40 et 400 um, sans que ce domaine ait un caractère limitatif. Le mélange de liquides circulant dans le conduit pourra être à température ambiante ou à une température plus élevée.

Dans l'application au dessalage, des températures d'au moins environ 50°C se sont révélées favorables à un dessalage efficace. Ainsi qu'on le verra ci-après, l'efficacité du dessalage à l'aide du dispositif conforme à l'invention peut dépasser 95%, et est supérieure à celle obtenue avec le seul dessaleur dans les mêmes conditions de traitement.

Dans tous les cas, le ou les tubes équipés d'un faisceau de fibres seront de préférence disposés verticalement ou obliquement, afin de faciliter l'écoulement des liquides par gravité. La perte de charge entre les deux extrémités du conduit est peu importante, en général inférieure à 100 kilopascals.

Les dessins annexés, qui n'ont pas de caractère limitatif, illustrent diverses formes de mise en oeuvre de l'invention. Sur ces dessins:

La figure 1 est une vue schématique d'un dispositif conforme à l'invention, avec l'ensemble de tubes à faisceau de fibres disposé en amont d'un dessaleur;

La figure 2 est une vue schématique d'un dispositif conforme à l'invention, avec l'ensemble de tubes à faisceau de fibres disposé en aval d'un dessaleur;

La figure 3 est une coupe longitudinale, suivant la ligne III-III de la figure 4, d'une enceinte contenant l'ensemble des tubes placés dans une chambre de section annulaire.

La figure 4 est une coupe suivant la ligne IV-IV de la figure 3;

La figure 5 est une représentation partielle en coupe d'un autre mode de réalisation de l'enceinte contenant les tubes, lesquels sont situés à l'intérieur d'une chambre dont la section est une spirale.

La figure 6 est une vue schématique représentant un faisceau de fibres.

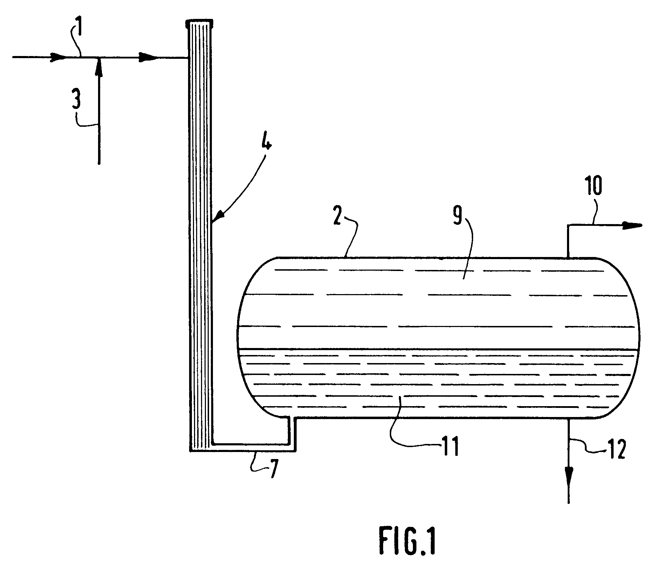

Dans la forme de réalisation de la figure 1, la ligne 1 d'alimentation en pétrole brun du dessaleur électrostatique 2 est alimentée en eau de dessalage par la ligne 3. En aval du point de raccordement des lignes 1 et 3 est habituellement prévue une vanne de mélange destinée à mélanger intimement l'eau et le pétrole sous forme de très fines gouttelettes, de façon à assurer une importante surface de contact entre les deux phases.

Dans le cas présent, cette vanne est supprimée et la ligne 1 est raccordée au sommet d'une enceinte verticale 4, contenant un ensemble de tubes, chaque tube contenant un faisceau de fibres, fixé à l'extrémité amont du tube. Les fibres ont une affinité préférentielle pour l'eau et les gouttes d'eau viennent les mouiller jusqu'à former un film continu, qui s'écoule le long de la fibre associée. On notera l'importante surface d'échange qui existe entre l'eau et le pétrole brut tout au long des nombreuses fibres pour une quantité donnée d'eau, ce qui facilite et accroît le dessalage du pétrole. Au bas de chaque tube, une séparation partielle de l'eau de dessalage et du pétrole brut s'est donc produite et le mélange obtenu peut être évacué par une ligne 7 jusqu'à la base du dessaleur 2, où la séparation pétrole brut/eau achèvera de s'effectuer. La phase de pétrole brut dessalé 9 pourra être évacuée de façon usuelle à la partie supérieure du dessaleur par une ligne 10, tandis que l'eau 11 pourra être évacuée à sa base par la ligne 12.

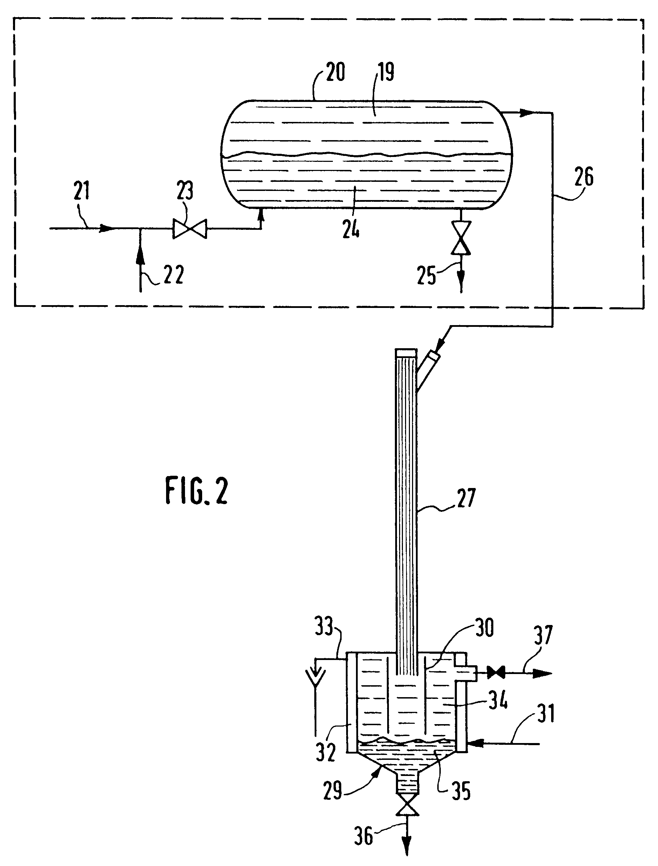

Dans la forme de réalisation de la figure 2, le dessaleur 20 est alimenté en pétrole brut par la ligne 21. De l'eau de dessalage est introduite dans la ligne 21 par une ligne 22, en aval de laquelle est prévue, de façon usuelle, une vanne de mélange 23. La phase d'eau salée 24 séparée dans le dessaleur est évacuée à la base de celui-ci par une ligne 25, tandis que la phase hydrocarbures 19 est évacuée à la partie supérieure par une ligne 26 vers une enceinte verticale 27 contenant un ensemble de tubes, chaque tube contenant un faisceau de fibres.

L'enceinte 27 est raccordée à son extrémité aval à un décanteur 29, et les faisceaux de fibres font saillie en dehors de l'extrémité des tubes dans une partie centrale du décanteur, limitée par une cloison cylindrique 30. Le décanteur 29 est réchauffé à l'aide d'eau chaude, introduite par la ligne 31 dans une chemise 32 et évacuée par la ligne 33.

Les fibres des faisceaux, qui occupent sensiblement toute la section transversale des tubes, sont mouillables préférentiellement par l'eau, de sorte que les gouttelettes d'eau salée demeurant en suspension dans la phase d'hydrocarbures 25 séparée dans le dessaleur s'appliquent contre ces fibres, coalescent et forment un film sensiblement continu, qui s'écoule jusqu'au décanteur 29. La phase eau 35 ainsi séparée est évacuée à la base du décanteur par la ligne 36, tandis que le pétrole brut 34 est récupéré à la partie supérieure par la ligne 37.

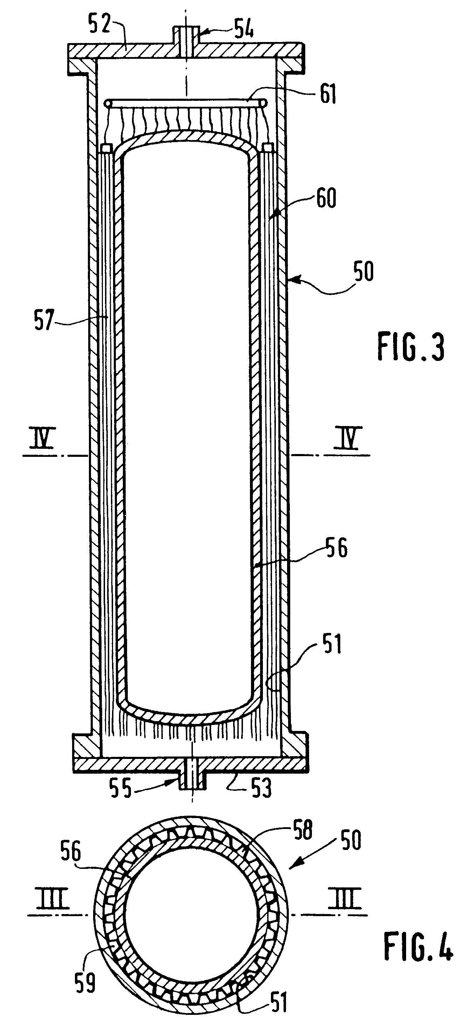

Les figures 3 et 4 représentent une enceinte contenant un ensemble de tubes, dans lesquels peuvent être disposés les faisceaux de fibres. Les tubes sont situés dans une chambre de section annulaire.

Dans cette forme de réalisation, l'enceinte 50 est constituée par un cylindre 51 équipé d'un couvercle 52 et d'un fond 53.

Le couvercle 52 et le fond 53 sont munis d'ouvertures 54 et 55, pour respectivement introduire et soutirer le mélange de pétrole brut et d'eau.

L'enceinte 50 contient une âme centrale cylindrique 56, dont les moyens de fixation n'ont pas été représentés dans un but de simplification.

La paroi 51 de l'enceinte 50 et l'âme 56 forment une chambre 57 de section annulaire, dans laquelle est disposée une tôle ondulée 58 qui est en contact alternativement par ses ondulations avec la paroi 51 et l'âme 56 pour former avec celles-ci une pluralité de tubes 59. Dans chaque tube est disposé un faisceau de fibres 60 attaché à un système de fixation 61 formant un anneau.

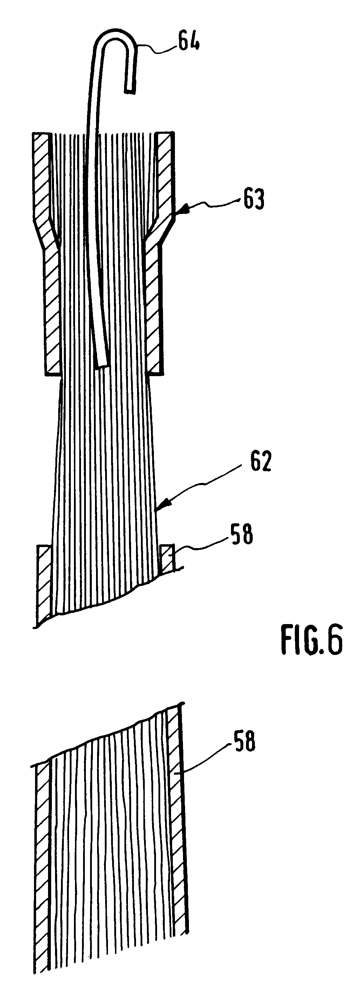

Les fibres 62, telles que représentées sur la figure 6, sont par exemple en polyamide et ont une longueur de 2 mètres. Il peut y en avoir 10.000 par faisceau, leur diamètre étant de $120.10^{-4}$ cm. Elles sont serties dans un collier 63 équipé d'un crochet 64, afin de pouvoir accrocher le faisceau au système de fixation.

En fonction du débit du pétrole brut que l'on doit dessaler, on adaptera le nombre de tubes, en réalisant éventuellement plusieurs chambres 57 délimitées par des parois concentriques, entre lesquelles sont insérés des éléments ondulés.

Dans un mode de réalisation particulièrement simple à fabriquer, on pourra aussi utiliser une seule chambre définie par un enroulement en spirale de deux parois lisses entre lesquelles est inséré un élément ondulé.

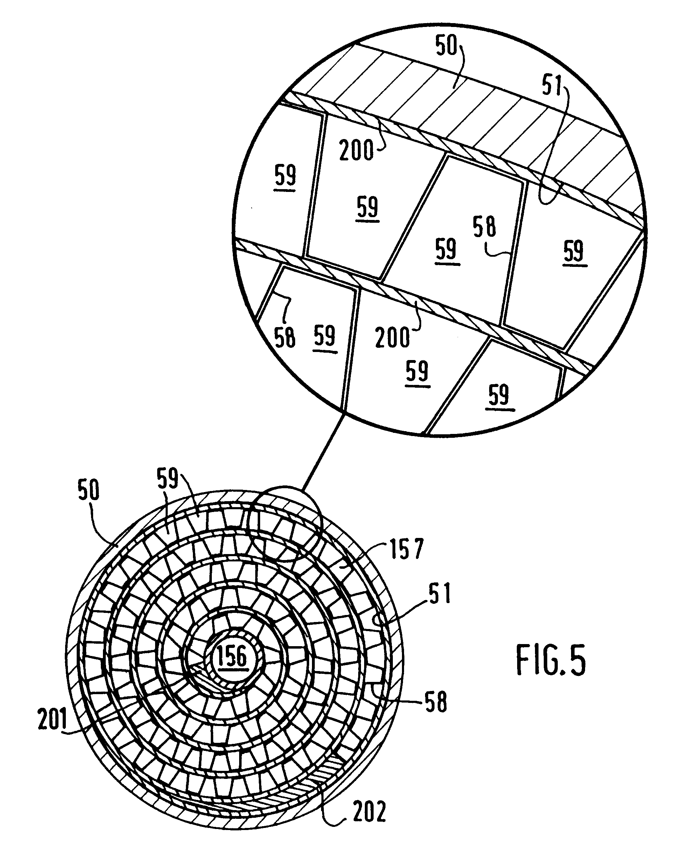

La figure 5 représente un mode de réalisation particulièrement simple à fabriquer du dispositif de l'invention, permettant de disposer des tubes 59 dans la quasi-totalité de la section de l'enceinte 50.

La chambre 157 se développe à partir du noyau 156 (de dimension transversale beaucoup plus faible que le noyau 56 décrit aux figures 3 et 4) et jusqu'à la paroi interne 51 de l'enceinte 50, par enroulement en spirale d'une tôle lisse 200. La tôle ondulée 58 ménageant les tubes 59 est placée dans la chambre 157.

En pratique, la tôle lisse 200 et la tôle ondulée 58 sont enroulées l'une sur l'autre autour du noyau 156. Les références 201 et 202 désignent des cales, respectivement de début et de fin d'enroulement, destinées à remplir la section de l'enceinte 50, pour éviter que du liquide ne puisse s'écouler ailleurs que par les tubes 59.

Les tubes 59 sont remplis de fibres rassemblées en faisceaux, tels que représentés sur la figure 6. Chaque crochet 64 est dans ce cas attaché à un système de fixation (non représenté) dont la forme est une spirale.

On n'a fait mention dans la présente description, que de la séparation de l'eau et du pétrole brut dans le cas du dessalage de celui-ci, mais il est entendu qu'on pourra séparer, avec le dispositif selon l'invention, d'autres couples eau-hydrocarbure, par deshydratation, en utilisant des fibres hydrophiles ou par captage des hydrocarbures avec des fibres oléophiles. On pourra séparer également d'autres couples de liquides, comme par exemple l'eau et les huiles alimentaires.

L'Exemple qui suit illustre une forme de mise en oeuvre de l'invention.

EXEMPLE

Cet exemple concerne le dessalage de différents pétroles bruts.

On a effectué des essais A, B, C, D et E avec un dispositif selon l'invention, tel que celui représenté sur la figure 1, et des essais témoin TA, TB, TC, TD et TE, avec un dessaleur classique tel que celui représenté sur la figure 2, mais limité au rectangle en traits tiretés, l'enceinte avec des tubes contenant des fibres étant supprimée.

Le dipositif selon l'invention comporte vingt cinq tubes munis chacun d'un faisceau de 10.000 fibres de polyamide d'une longueur de 2 mètres et d'un diamètre de $120.10^{-4}$ cm. Chaque tube a un taux de remplissage de 30%.

Les résultats obtenus figurent dans le tableau ci-après. Les légendes s'y rapportant apparaissent à la fin du Tableau.

TABLEAU

| | Essai | A | TA | B | TB | C | TC |
|---|---|---|---|---|---|---|---|
| Pétrole brut | Nature | SJ | SJ | SJ | SJ | NF | NF |
| | Masse volumique à 15°C en kg/cm$^3$ | 826 | 826 | 836 | 836 | 854 | 854 |
| | Teneur en eau en ppm (1) | 2980 | 2980 | 3841 | 3841 | 6123 | 6123 |
| | Teneur en sels en ppm (1) | 28 | 28 | 29,5 | 29,5 | 64 | 64 |
| % en poids d'eau rajoutée (2) par rapport au pétrole brut | | 5,9 | 5,9 | 5,1 | 5,1 | 6 | 6 |
| Température de décantation (3) | | 140 | 140 | 135 | 135 | 133 | 133 |
| Analyses après décan- tation | Teneur en eau du pétrole brut en ppm (4) | 5540 | 4300 | 5903 | 4550 | 5217 | 5000 |
| | Teneur en sels du pétrole brut en ppm (4) | 1,9 | 2,5 | 2,3 | 3 | 2,8 | 3 |
| | Teneur en hydrocarbures de la phase aqueuse en ppm (5) | <20 | 80 | <20 | 120 | 150 | 450 |
| % Dessalage (6) | | 93,2 | 91,1 | 92,2 | 89,8 | 95,6 | 95,3 |
| % Lavage (7) | | 99,6 | 98,8 | 98 | 98,8 | 100 | 100 |

TABLEAU (Suite)

| Essai | | D | TD | E | TE |
|---|---|---|---|---|---|
| | Nature | AL | AL | ME | ME |
| Pétrole brut | Masse volumique à 15°C en kg/m$^3$ | 863 | 863 | 858 | 858 |
| | Teneur en eau en ppm (1) | 1900 | 1900 | 5362 | 5362 |
| | Teneur en sels en ppm (1) | 16,5 | 16,5 | 42 | 42 |
| % en poids d'eau rajoutée (2) par rapport au pétrole brut | | 6,6 | 6,6 | 6,5 | 6,5 |
| Température de décantation (3) | | 139 | 139 | 136 | 136 |
| Analyses après Décantation | Teneur en eau du pétrole brut en ppm (4) | 23010 | 5900 | 30000 | 6400 |
| | Teneur en sels du pétrole brut en ppm (4) | 3,3 | 5 | 6,4 | 16 |
| | Teneur en hydrocarbures de la phase aqueuse en ppm (5) | 40 | 150 | 50 | 180 |
| % Dessalage (6) | | 80 | 69,7 | 84,7 | 61,9 |
| % Lavage (7) | | 95,3 | 92,9 | 87,5 | 74,5 |

LEGENDE DES TABLEAUX:

(1) Dans les lignes 1 (figure 1) ou 21 (figure 2)
(2) Par les lignes 3 (figure 1) ou 22 (figure 2)
(3) Dans les dessaleurs 2 (figure 1) ou 20 (figure 2)
(4) Dans les lignes 10 (figure 1) ou 26 (figure 2)
(5) Dans les lignes 12 (figure 1) ou 25 (figure 2)
(6)

$$\% \text{ dessalage} = 100 \; \frac{\text{Concentration en sels dans le brut à l'entrée}}{\text{Concentration en sels dans le brut à la sortie}}$$

7

(7)

$$\% \text{ Lavage } = 100 \, \frac{A - B}{A - C} \text{ avec}$$

$$A = \frac{\text{Concentration en sels dans l'eau contenue dans le brut à l'entrée}}{\text{Concentration en eau dans le brut à l'entrée}}$$

$$B = \frac{\text{Concentration en sels dans l'eau contenue dans le brut à la sortie}}{\text{Concentration en eau dans le brut à la sortie}}$$

$$C = \frac{\text{Concentration en sels dans l'eau contenue dans le brut à l'entrée}}{\% \text{ eau totale par rapport au brut}}$$

Eau totale = eau dans le brut à l'entrée + eau ajoutée

- SJ    Brut STATFJORD
- NF    Brut NIGERIA FORCADOS
- AL    Brut ARABE LEGER
- ME    Brut MEXICAIN

Ces résultats montrent qu'avec le dispositif selon l'invention, le dessalage est meilleur qu'avec un dispositif classique. En outre, le lavage, qui représente la tendance des sels à passer dans l'eau de décantation, est en général équivalent et souvent meilleur.

**Revendications**

1. Dispositif pour favoriser la séparation et/ou le contact de deux liquides non miscibles, ledit dispositif comprenant au moins une conduite d'alimentation (1, 26) en une émulsion des deux liquides d'au moins un tube, dans lequel est disposé dans le sens de sa longueur, selon au moins une partie de celle-ci, un faisceau de fibres (62) présentant une mouillabilité préférentielle par l'un des deux liquides, ledit tube étant relié à un décanteur (2, 29) dans lequel les deux liquides se séparent, le décanteur étant équipé de conduites d'évacuation de chacun des deux liquides, ledit dispositif étant caractérisé en ce que les fibres sont réparties dans un ensemble de tubes (59) délimités par deux parois (51, 56), séparées par une distance sensiblement constante, et par un élément ondulé (58), inséré entre ces parois et en contact alternativement avec chacune d'entre elle par ses ondulations.

2. Dispositif selon la revendication 1, caractérisé en ce que les tubes (59) sont définis par une pluralité de parois concentriques (51,56) entre lesquelles sont insérés des éléments ondulés (58).

3. Dispositif selon la revendication 1, caractérisé en ce que les tubes sont définis par une unique paroi à section transversale en spirale (51) entre les parties contiguës de laquelle est inséré un élément ondulé (58).

4. Utilisation d'un dispositif selon l'une des revendications 1 à 3 pour le dessalage d'une charge hydrocarbonée, notamment de pétrole brut, en provenance d'un dessaleur (2,20) sous la forme d'une émulsion d'eau et de cette charge, caractérisée en ce que cette émulsion est introduite à une extrémité dudit dispositif et s'écoule dans les tubes (59) de ce dispositif jusqu'à son extrémité opposée pour y être recueillie dans un décanteur (29).

5. Utilisation d'un dispositif selon l'une des revendications 1 à 3, pour le dessalage d'une charge hydrocarbonnée que l'on introduit en mélange avec de l'eau dans un dessaleur, caractérisée en ce que ce mélange est introduit à une extrémité dudit dispositif en amont du dessaleur et s'écoule dans les tubes (59) de ce dispositif jusqu'à l'extrémité opposée pour y être introduit dans le dessaleur.

**Claims**

1. A device for promoting the separation and/or contact of two immiscible liquids, said device comprising at least one pipe (1, 26) for supplying an emulsion of the two liquids to at least one tube in which there is arranged in the longitudinal direction, along at least part thereof, a bundle of fibres (62) exhibiting a preferential wettability by one of the two liquids, said tube being connected to a decanter (2, 29) in which the two liquids separate, the decanter being equipped with outlet pipes for each of the two liquids, said device being characterized in that the fibres are distributed among an assembly of tubes (59) defined by two walls (51, 56) separated by a substantially constant distance, and by an undulating member (58) inserted between these walls and in contact alternately with each of them via its undulations.

2. A device according to claim 1, characterized in that the tubes (59) are defined by a plurality of concentric walls (51, 56) between which are inserted undulating members (58).

3. A device according to claim 1, characterized in that the tubes are defined by a single wall (51) with a spiral transverse section, between the contiguous parts of which there is inserted an undulating member (58).

4. Use of a device according to any one of claims 1 to 3, for desalination of a hydrocarbon load, especially crude oil, coming from a desalinator (2, 20) in the form of an emulsion of water and this load, characterized in that this emulsion is introduced at one end of said device and flows in the tubes (59) of this device as far as its opposite end to be collected there in a decanter (29).

5. Use of a device according to any one of claims 1 to 3, for desalination of a hydrocarbon load which is introduced into a desalinator in a mixture with water, characterized in that this mixture is introduced at one end of said device upstream of the desalinator and flows in the tubes (59) of this device as far as the opposite end, there to be introduced into the desalinator.

**Patentansprüche**

1. Vorrichtung zur Begünstigung der Trennung bzw. des Kontakts zweier nicht mischbarer Flüssigkeiten, wobei die Vorrichtung mindestens eine Leitung (1, 26) zur Zuführung der zwei Flüssigkeiten in Form einer Emulsion in mindestens ein Rohr umfaßt, in dem in Längsrichtung und mindestens auf einen Teil seiner Länge ein Faserbündel (62) angeordnet ist, das eine bevorzugte Benetzbarkeit durch eine der beiden Flüssigkeiten besitzt, und wobei das Rohr mit einem Schwereabscheider (2, 29) verbunden ist, in dem die Trennung der beiden Flüssigkeiten erfolgt und der mit Leitungen zum Abzug einer jeden der beiden Flüssigkeiten versehen ist, dadurch gekennzeichnet, daß die Fasern in einer Anordnung von Rohren (59) verteilt sind, die durch zwei weitgehend in einem konstanten Abstand ausgebildeten Wandungen (51, 56) begrenzt und durch ein Wellenelement (58) getrennt sind, das zwischen diesen Wandungen eingesetzt ist und abwechselnd mit jeweils einer seiner Wellen in Kontakt kommt.

2. Vorrichtung nach Anspruch 1, dadurch gekennzeichnet, daß die Rohre (59) durch eine Vielzahl konzentrischer Wandungen (51, 56) gebildet werden, zwischen denen Wellenelemente (58) eingesetzt sind.

3. Vorrichtung nach Anspruch 1, dadurch gekennzeichnet, daß die Rohre durch eine einzige Wandung von spiralförmigem Querschnitt (51) gebildet werden, zwischen deren angrenzenden Abschnitten ein Wellenelement (58) eingesetzt ist.

4. Anwendung einer Vorrichtung nach irgendeinem der Ansprüche 1 bis 3 zum Entsalzen einer Kohlenwasserstoff-Charge, und insbesondere von Rohöl, die/das in Form einer Emulsion aus Wasser und dieser Charge aus einer Entsalzungsvorrichtung (2, 20) austritt, dadurch gekennzeichnet, daß die Emulsion an einem Ende der Vorrichtung eingeleitet wird und in den Rohren (59) dieser Vorrichtung zum gegenüberliegenden Ende strömt, um dort in einem Schwereabscheider (29) gesammelt zu werden.

5. Anwendung einer Vorrichtung nach irgendeinem der Ansprüche 1 bis 3 zum Entsalzen einer Kohlenwasserstoff-Charge, die als Gemisch mit Wasser in eine Entsalzungsvorrichtung eingeführt wird, dadurch gekennzeichnet, daß das Gemisch an einem Ende der Vorrichtung vor der Entsalzungsvorrichtung eingeleitet wird und in den Rohren (59) dieser Vorrichtung zum gegenüberliegenden Ende strömt, um dort in die Entsalzungsvorrichtung eingeführt zu werden.

FIG.1

FIG. 2

FIG.3

FIG.4

FIG.5

64

63

62

58

**FIG.6**

58